# EUROPÄISCHE PATENTSCHRIFT

(11) **EP 1 177 115 B1**
(45) Veröffentlichungstag und Bekanntmachung des Hinweises auf die Patenterteilung: **26.02.2003**
(21) Anmeldenummer: 00918890.5
(22) Anmeldetag: 18.04.2000
(51) Int. Cl.: B60R 13/07, B60R 13/04

(54) **ABDECKVORRICHTUNG FÜR MONTAGEAUSSPARUNGEN AN DACHLEISTEN VON AUTOKAROSSERIEN**
COVER DEVICE FOR ASSEMBLY RECESSES ON ROOF-DRIP MOULDINGS OF MOTOR VEHICLE BODIES
DISPOSITIF DE RECOUVREMENT POUR CAVITES DE MONTAGE DE CARROSSERIES D'AUTOMOBILE

(30) Priorität: 30.04.1999 DE 19919852
(43) Veröffentlichungstag der Anmeldung: 06.02.2002
(73) Patentinhaber: A. Raymond & Cie, 38028 Grenoble (FR); DURA Automotive Body & Glass Systems GmbH & Co. KG, 58840 Plettenberg (DE)
(72) Erfinder: TREMMEL, Günter, D-79739 Schwörstadt (DE); REGENSBURGER, Jan, D-79400 Kandern (DE); PIRIA, Maurizio, D-58849 Herscheid (DE)
(74) Vertreter: Kirchgaesser, Johannes, Dipl.-Ing.
(86) Internationale Anmeldenummer: EP0003511
(87) Internationale Veröffentlichungsnummer: WO00066397

(56) Entgegenhaltungen:
- EP-A- 0 827 870
- DE-A- 3 637 856
- DE-A- 19 745 757
- US-A- 3 542 264

## Beschreibung

Zur Abdeckung von Dachkanälen bei Autokarosserien werden üblicherweise Dachleistenprofile mit integrierten Gummiprofilen verwendet, welche sich mit seitlich abstehenden Dichtlippen im Dachkanal dichtend abstützen und dabei die Dachleiste im Dachkanal festlegen. Diese Dachleistenprofile weisen in der Regel zur eventuellen Befestigung von Dachträgern oder dergleichen an ihrer nach oben weisenden Querwand längliche Aussparungen an den Stellen auf, wo sich im Grund des Dachkanals die entsprechenden Verankerungspunkte befinden.

Aus DE 36 37 856 A1 ist eine solche, gattungsgemässe Abdeckvorrichtung für Montageaussparungen an Dachleisten bekannt, welche aus einem in der Dachleiste im Bereich der Aussparung einsetzbaren Deckelhalter und einem quer zur Längsrichtung der Dachleiste schwenkbar gelagerten Deckel zum Verschließen der Aussparung besteht. Der Deckelhalter besitzt hierbei in seinem Bodenteil eine Aussparung und weist am Ende dieser Aussparung eine Auflage zur Abstützung des Deckels in seiner Schließstellung auf.

Um bei dieser Abdeckvorrichtung eine klapperfreie Führung für den Deckel zu erreichen, ist an der Unterseite der Abdeckleiste eine einseitig festgelegte Blattfeder aus Federstahl angeordnet, welche eine federnd nachgiebige Gleitbahn für einen Nocken des Deckels bildet. Diese klapperfreie Führung des Deckels erfordert jedoch nicht nur den zusätzlichen Einbau einer Metallfeder und eine entsprechende Kanaltiefe, sondern der bauliche Aufwand wird auch als sehr umständlich und kostenspielig angesehen.

Ausgehend von diesem Stand der Technik wird die Aufgabe der Erfindung darin gesehen, eine Abdeckvorrichtung nach dem Oberbegriff zu schaffen, welche nicht nur kostengünstiger herzustellen ist, sondern auch bei kleineren Profilquerschnitten der Dachleiste bzw. geringeren Dachkanaltiefen problemlos eingebaut und für den Gebrauchszweck schnell und einfach nutzbar gemacht werden kann.

Diese Aufgabe wird nach der Erfindung dadurch gelöst, daß am gegenüberliegenden Ende der Aussparung beiderseits davon Lagerböcke mit aufeinander zu gerichteten Lagerzapfen angeformt sind, welche in entsprechende, an einem Ende des Deckels seitlich vorgesehene Lagerlöcher elastisch auffederbar eingreifen.

Weitere Merkmale der Erfindung sind in den Unteransprüchen angegeben und sollen nachfolgend anhand eines in der Zeichnung dargestellten Ausführungsbeispiels näher erläutert werden. Es zeigt
- Fig. 1: Eine Dachleiste mit Abdeckvorrichtung und Aufnahmeteil vor dem Zusammenbau in perspektivischer Darstellung,
- Fig. 2: die gleiche Dachleiste mit eingebauter Abdeckvorrichtung und Aufnahmeteil bei geschlossenem Deckel,
- Fig. 3: die Abdeckvorrichtung in perspektivischer Darstellung mit Deckel in Schließstellung und
- Fig. 4: die Abdeckvorrichtung mit hochgeschwenktem Deckel in Öffnungsstellung.

Die in den Figuren dargestellte Abdeckvorrichtung dient zum Verschließen der Montageaussparungen in Dachleisten **1**, welche zur Abdeckung von Dachkanälen bei Autokarosserien verwendet werden.

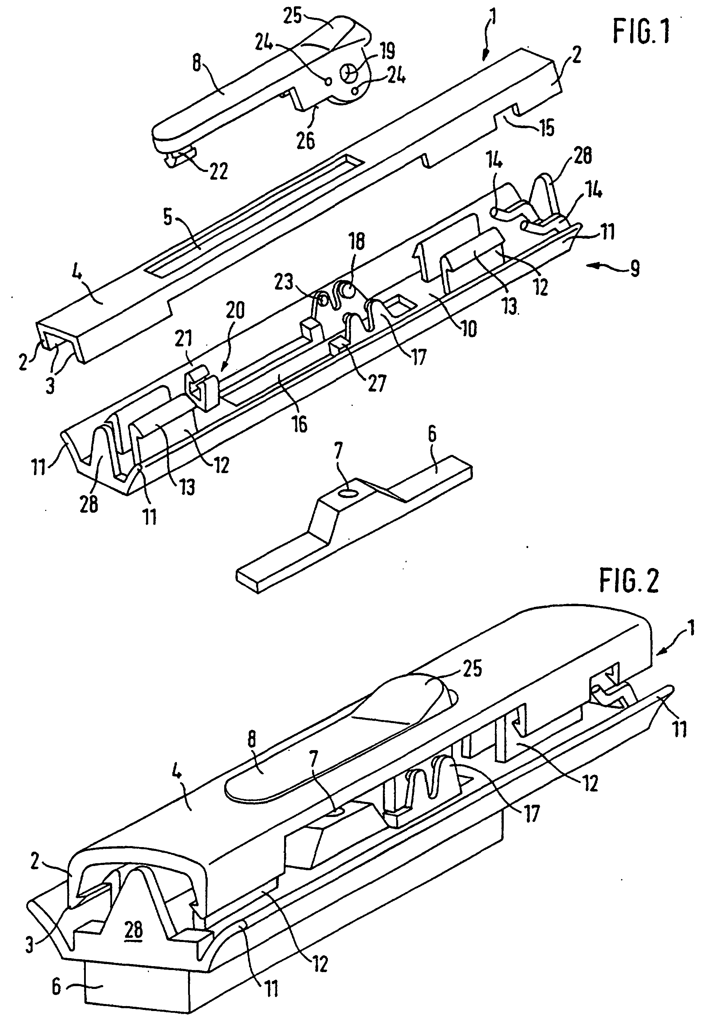

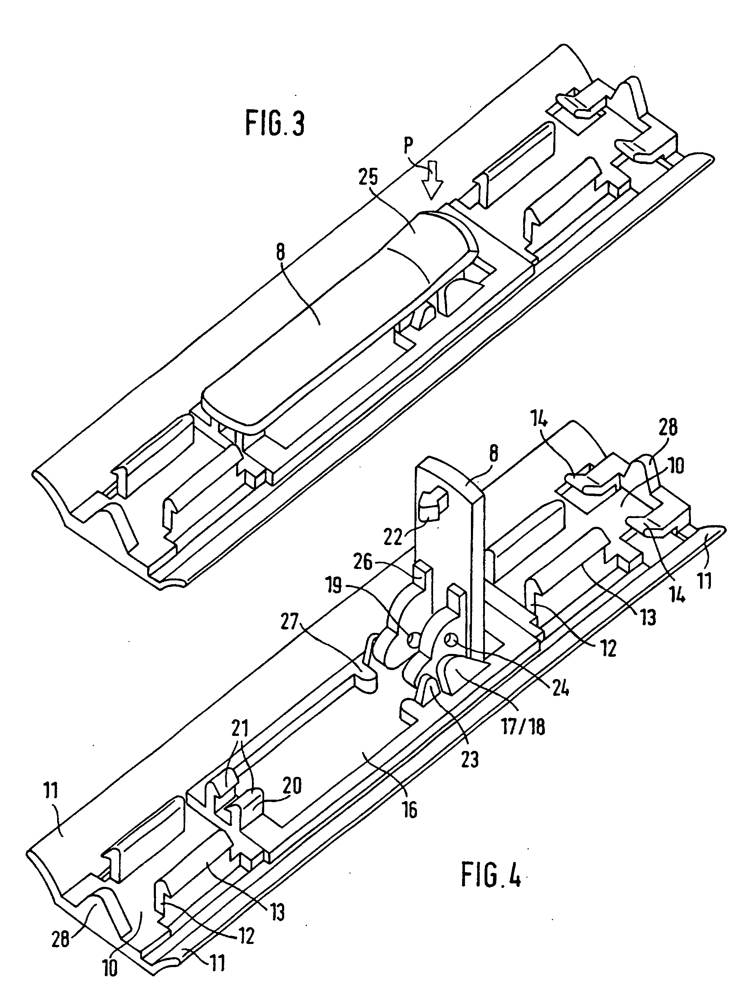

Wie aus den **Figuren 1 und 2** ersichtlich, ist die Dachleiste **1** hierbei im Querschnitt u-förmig ausgebildet, wobei die seitlichen Stege **2** an ihren freien Enden nach innen abstehende Rastkanten **3** aufweisen. In der oben liegenden Querwand **4** befindet sich eine längliche, rechteckige Aussparung **5**, welche zum Einführen der Befestigungsstützen von Dachträgern oder sonstigen Aufbauten dient. Zur Aufnahme dieser Stützen ist ein Aufnahmeteil **6** vorgesehen, welches unterhalb der Aussparung **5** im Grund des Dachkanals verankert wird und beispielsweise mit einem Aufnahmeloch **7** für Gewindeschweißbolzen versehen sein kann.

Oberhalb der Dachleiste **1** ist ein vorzugsweise aus Kunststoff hergestellter Dekkel **8** abgebildet, welcher in Länge und Breite der Aussparung **5** angepaßt ist. Unterhalb der Dachleiste **1** ist ein Deckelhalter **9** dargestellt, in welchem der Dekkel **8** schwenkbar gelagert wird. Der Deckelhalter **9** besteht aus einem langgezogenen, vorzugsweise aus hartem Kunststoff geformten Bodenteil **10**, welches der Breite des Dachkanals angepaßt ist, und weist an seinen Längskanten schräg nach oben abstehende Dichtlippen **11** aus weichem Kunststoffmaterial auf, welche am Bodenteil **10** nach dem Zwei-Komponenten-Spritzgießverfahren angeformt sind und sich im Einbauzustand dichtend an den Seitenwänden des Dachkanals anlegen.

Auf dem Bodenteil **10** sind in der Nähe beider Enden jeweils zwei Befestigungsstege **12** gegenüberliegend angeformt, welche an ihren freien Enden mit nach außen abstehenden Rastkanten **13** versehen sind. Diese lassen sich beim Positionieren des Deckelhalters **9** in der Dachleiste **1** zwischen die Stege **2** einführen und an den Rastkanten **3** einrasten. An einem Ende des Bodenteils **10** sind außerdem zwei schräg nach oben abstehende Rastfinger **14** auffederbar angeformt. welche in entsprechende Einschnitte **15** in den Rastkanten **3** im Einbauzustand eingreifen, um den Lagerhalter **9** in der Dachleiste **1** in Längsrichtung zu fixieren.

An beiden Enden des Bodenteils **10** sind ferner Abstandshalter **28** angeformt, welche die Dachleiste **1** beim Zusammenbau mit dem Deckelhalter **9** nach dem Aufsetzen auf die Befestigungsstege **12** und dem Einrasten der Rastkanten **3** unter den Rastkanten **13** in vorbestimmter Höhenlage über dem Lagerhalter **9** abstützen (vgl. **Figur 2**).

Unterhalb der Aussparung **5** der Dachleiste **1** befindet sich im Bodenteil **10** eine weitere Aussparung **16**, welche im Einbauzustand des Deckelhalters **9** vom Aufnahmeteil **6** durchdrungen wird. Am Bodenteil **10** sind an dessen einem Ende beiderseits dieser Aussparung **16** Lagerböcke **17** mit zueinandergerichteten Lagerzapfen **18** angeformt, welche in entsprechende, an einem Ende des Deckels **8** seitlich vorgesehene Lagerlöcher **19** eingreifen. Die Lagerzapfen **18** stehen hierbei nur soweit nach innen vor, daß diese unter elastischem Aufbiegen der Lagerböcke **17** in die Lagerlöcher **19** eingerastet werden können.

Am anderen Ende der Aussparung **16** befindet sich eine Auflage **20**, welche zur Abstützung des Deckels **8** in seiner Schließstellung dient. Diese Auflage **20** ist an ihrem oberen Ende vorzugsweise mit Rastmitteln **21** versehen, welche mit entsprechenden Gegenrastmitteln **22** unterhalb des Deckels **8** zusammenwirken und diesen im Schließzustand druckknopfartig festhalten.

Um den Deckel **8** in der hochgeschwenkten Öffnungsstellung gemäß **Figur 4** sicher festzuhalten, sind neben den Lagerböcken **17** am Bodenteil **10** zwei gegeneinander gerichtete Rastnocken **23** auffederbar angeformt, denen im Deckel 8 neben den Lagerlöchern **19** entgegen der Drehrichtung beim Öffnen zwei jeweils um 90° versetzte Einbuchtungen **24** zugeordnet sind. In diese können die Rastnocken **23** sowohl beim Hochschwenken als auch bei Schließen des Deckels **8** druckknopfartig einrasten.

Um den Deckel **8** aus der Schließstellung leichter in die in **Figur 4** gezeigte Öffnungsstellung bringen zu können, ist der über die Lagerlöcher **19** hinausragende Teil des Deckels **8** als Druckplatte **25** ausgebildet, welche den Rand der Aussparung **5** in der Schließstellung um soviel überragt, daß beim Niederdrücken der Druckplatte **25** in Richtung des Pfeiles **P** ( siehe **Fig. 3** ) die Rastmittel **21** und **22** ausrasten und der Deckel **8** leicht nach oben geschwenkt werden kann.

Zur sicheren Abstützung des Deckels **8** in der Schließstellung sind an der Unterseite des Deckels **8** vor den Lagerlöchem **19** zur Auflageseite hin weitere Auflageflächen **26** vorgesehen, denen im Deckelhalter **9** entsprechende Stützflächen **27** zugeordnet sind. Auf diese Weise werden die Lagerzapfen **18** in der Schließstellung des Deckels **8** entlastet.

Wie aus **Figur 3 und 4** ersichtlich, weist die Bodenplatte **10** neben der Aussparung **16** für das Aufnahmeteil **6** noch weitere Durchbrüche im Bereich der Federstege **12** und der Rastfinger **14** auf, welche allein aus entformungstechnischen Gründen in der zur Herstellung des Deckelhalters **9** erforderlichen Spritzgießform vorgesehen sind und für die erfindungsgemäße Ausbildung des Deckelhalters **9** keinerlei Bedeutung haben.

## Patentansprüche

1. Abdeckvorrichtung für Montageaussparungen an in Fahrzeuglängsrichtung verlaufenden Dachleisten von Autokarosserien, bestehend aus einem in der Dachleiste (1) im Bereich der Aussparung (5) einsetzbaren Deckelhalter (9) und einem quer zur Längsrichtung der Dachleiste (1) schwenkbar gelagerten Deckel (8) zum Verschließen der Aussparung (5), wobei der Deckelhalter (9) in seinem Bodenteil (10) ebenfalls eine Aussparung (16) besitzt und am Ende dieser Aussparung (16) eine Auflage (20) zur Abstützung des Deckels (8) in seiner Schließstellung aufweist, **dadurch gekennzeichnet, daß** am gegenüberliegenden Ende der Aussparung (16) beiderseits davon Lagerböcke (17) mit aufeinander zu gerichteten Lagerzapfen (18) angeformt sind, welche in entsprechende, an einem Ende des Deckels (8) seitlich vorgesehene Lagerlöcher (19) elastisch auffederbar eingreifen.

2. Abdeckvorrichtung nach Anspruch 1, **dadurch gekennzeichnet, daß** am Bodenteil (10) neben den Lagerböcken (17) zwei gegeneinander gerichtete Rastnocken (23) auffederbar angeformt sind, denen im Deckel (8) neben den Lagerlöchern (19) entgegen der Öffnungsdrehrichtung zwei jeweils um etwa 90° versetzte Einbuchtungen (24) zum federnden Einrasten der Rastnocken (23) in der Öffnungsstellung des Deckels (8) zugeordnet sind.

3. Abdeckvorrichtung nach Anspruch 1 oder 2, **dadurch gekennzeichnet, daß** der Deckelhalter (9) an seiner Auflageseite Rastmittel (21) aufweist, welche in der Schließstellung des Deckels (8) in entsprechende Gegenrastmittel (22) unterhalb des Deckels (8) druckknopfartig einrasten.

4. Abdeckvorrichtung nach Anspruch 1 oder 2, **dadurch gekennzeichnet, daß** die Lagerlöcher (19) in kurzem Abstand vor dem Ende des Deckels (8) angeordnet sind.

5. Abdeckvorrichtung nach einem der Ansprüche 1 bis 4, **dadurch gekennzeichnet, daß** an der Unterseite des Deckels (8) vor den Lagerlöchern (19) zur Auflageseite hin weitere Auflageflächen (26) vorgesehen sind, denen im Deckelhalter (9) entsprechende Stützflächen (7) zugeordnet sind, auf denen die Auflageflächen (26) in Schließstellung aufliegen.

## Claims

1. A cover device for fitment openings on roof strip members, extending in the longitudinal direction of a vehicle, of motor car bodies, comprising a cover holder (9) which can be fitted in the roof strip member (1) in the region of the opening (5) and a cover (8) mounted pivotably transversely with respect to the longitudinal direction of the roof strip member (1), for closing the opening (5), wherein in its bottom part (10) the cover holder (9) also has an opening (16) and at the end of said opening (16) it has a support means (20) for supporting the cover (8) in its closed position, **characterised in that** formed at the opposite end of the opening (16) at both sides thereof are mounting brackets (17) with mounting trunnions (18) which are directed towards each other and which elastically resiliently openably engage into corresponding mounting holes (19) provided laterally at one end of the cover (8).

2. A cover device according to claim 1 **characterised in that** resiliently openably formed on the bottom part (10) beside the mounting brackets (17) are two retaining projections (23) which are directed towards each other and with which there are associated in the cover (8) beside the mounting holes (19) in opposite relationship to the opening direction of rotation two recesses (24) respectively displaced through about 90° for resilient retaining engagement of the retaining projections (23) in the open position of the cover (8).

3. A cover device according to claim 1 or claim 2 **characterised in that** on its support side the cover holder (9) has retaining means (21) which in the closed position of the cover (8) engage press stud-like into corresponding counterpart retaining means (22) beneath the cover (8).

4. A cover device according to claim 1 or claim 2 **characterised in that** the mounting holes (19) are arranged at a short spacing in front of the end of the cover (8).

5. A cover device according to one of claims 1 to 4 **characterised in that** provided at the underside of the cover (8) in front of the mounting holes (19) towards the support side are further support surfaces (26) with which there are associated in the cover holder (9) corresponding support surfaces (7) on which the support surfaces (26) rest in the closed position.

## Revendications

1. Dispositif de recouvrement d'évidements de montage ménagés dans des baguettes de pavillon de carrosseries d'automobiles s'étendant dans le sens longitudinal du véhicule, se composant d'un support de couvercle (9) destiné à être inséré dans la baguette de pavillon (1) dans la zone de l'évidement (5) et d'un couvercle (8) destiné à obturer l'évide ment (5), monté avec la possibilité de basculer transversalement par rapport au sens longitudinal de la baguette de pavillon (1), le support de couvercle (9) présentant en l'occurrence, dans son élément formant fond (10) également un évidement (16) et à l'extrémité de cet évidement (16) un support fixe (20) constituant une portée d'appui pour le couvercle (8) dans sa position de fermeture, **caractérisé en ce qu'**au niveau de l'extrémité opposée de l'évidement (16) sont réalisés par moulage, de part et d'autre de celui-ci, des chevalets de support (17) portant des tourillons (18) orientés l'un vers l'autre, qui viennent en prise d'encastrement, avec la possibilité de céder par déformation élastique, dans des trous de support (19) prévus sur les côtés au niveau d'une extrémité du couvercle.

2. Dispositif de recouvrement selon la revendication 1, **caractérisé en ce que** sur l'élément formant fond (10) sont réalisés solidaires par moulage, à côté des chevalets de support (17), deux ergots d'accrochage (23) orientés en opposition l'un vers l'autre, avec la possibilité de céder par déformation élastique, auxquels correspondent, dans le couvercle (8), à côté des trous de support (19), à l'opposé du sens de pivotement lors de l'ouverture, deux alvéoles (24), respectivement décalées de 90°, pour l'encastrement par effet de déformation élastique des ergots d'accrochage (23) lorsque le couvercle (8) se trouve en position d'ouverture.

3. Dispositif de recouvrement selon la revendication 1 ou 2, **caractérisé en ce que** le support de couvercle (9) présente, au niveau de son côté support fixe des organes d'accrochage (21) qui viennent s'insérer, à la façon d'une fermeture par bouton-pression, dans la position de fermeture du couvercle (8), dans des éléments d'accrochage antagonistes (22) prévus en correspondance sous le couvercle (8).

4. Dispositif de recouvrement selon la revendication 1 ou 2, **caractérisé en ce que** les trous de support (19) sont disposés à faible distance de l'extrémité du couvercle (8).

5. Dispositif de recouvrement selon l'une des revendications 1 à 4, **caractérisé en ce que** d'autres surfaces d'appui (26), orientées en direction de la portée d'appui fixe, sont prévues au niveau de la face inférieure du couvercle (8), en amont des trous de support (19), auxquelles correspondent des surfaces d'appui (7) ménagées en correspondance dans le support de couvercle (9), sur lesquelles les surfaces d'appui (26) reposent en position de fermeture.
